# EUROPÄISCHE PATENTSCHRIFT

(11) **EP 1 838 631 B1**
(45) Veröffentlichungstag und Bekanntmachung des Hinweises auf die Patenterteilung: **04.06.2008**
(21) Anmeldenummer: 06700076.0
(22) Anmeldetag: 05.01.2006
(51) Int. Cl.: C02F 11/12, C02F 1/34, C02F 3/12, C02F 3/16

(54) **VORRICHTUNG ZUM ZERKLEINERN PARTIKULÄRER ORGANISCHER SUBSTANZEN IN SUSPENSIONEN VON MIKROORGANISMEN IN EINEM TRÄGERMEDIUM, INSBESONDERE IN ABWASSER**
DEVICE FOR COMMINUTING PARTICULATE ORGANIC SUBSTANCES IN SUSPENSIONS OF MICROORGANISMS SUSPENDED IN A CARRIER MEDIUM, ESPECIALLY IN WASTE WATER
DISPOSITIF POUR FRACTIONNER DES SUBSTANCES ORGANIQUES PARTICULAIRES DANS DES SUSPENSIONS DE MICRO-ORGANISMES DANS UN MILIEU DE SUPPORT, EN PARTICULIER DANS DES EAUX USEES

(30) Priorität: 20.01.2005 DE 202005000875 U
(43) Veröffentlichungstag der Anmeldung: 03.10.2007
(73) Patentinhaber: Bionik GmbH - Innovative Technik für die Umwelt, 65232 Taunusstein (DE)
(72) Erfinder: RICHTER, Michael, 65527 Niedernhausen (DE)
(74) Vertreter: Patentanwälte Möll und Bitterich
(86) Internationale Anmeldenummer: PCT/EP2006/000051
(87) Internationale Veröffentlichungsnummer: WO 2006/077014

(56) Entgegenhaltungen:
- EP-A- 0 743 285
- EP-A- 1 184 342
- WO-A-98/58740
- WO-A-03/082753
- DE-A1- 1 759 548
- DE-A1- 10 214 689
- US-A- 3 797 809
- US-A- 5 021 154

## Beschreibung

### Technisches Gebiet:

Die Reinigung von Abwasser erfolgt im allgemeinen in verschiedenen Stufen. So wird das Abwasser nach einer mechanischen Vorklärung meist einer biologischen Reinigung unterzogen. Dabei werden organische Substanzen unter aeroben Bedingungen mit Hilfe von Mikroorganismen in Wasser und Kohlenstoff umgesetzt. In dem so gereinigten Wasser bleiben aber noch beträchtliche Mengen an Stickstoff und Phosphor, so dass zunehmend Wert darauf gelegt wird, außer kohlenstoffhaltigen Substanzen in einer weitergehenden Reinigungsstufe auch Stickstoffverbindungen aus dem Abwasser zu entfernen. Dieser Vorgang erfolgt zweistufig; in einer ersten, durch Belüftung des Abwassers gekennzeichneten aeroben Behandlungsstufe, die parallel mit dem Abbau organischer Substanzen stattfinden kann, werden durch autotrophe Mikroorganismen, den Nitrifikanten, Ammoniumverbindungen zu Nitrit und schließlich zu Nitrat oxidiert. In einer nachfolgenden zweiten anaeroben Behandlungsstufe wird dann mit Hilfe von Denitrifikanten Nitrat in Stickstoff, Kohlenstoff und Wasser umgewandelt. Infolge Mangels an gelöstem Sauerstoff dient dabei das Nitrat als Sauerstoffquelle für den Umsetzungsprozess. Für die Eliminierung von Stickstoff aus dem Abwasser ist also der Wechsel von aeroben und anaeroben Verhältnissen Voraussetzung. Während beider Behandlungsstufen ist eine gute Durchmischung des Abwassers erforderlich.

In diesem Zusammenhang ist das sogenannte SBR("Sequencing-Batch-Reactor")-Verfahren bekannt. Dieses Verfahren zeichnet sich dadurch aus, dass die einzelnen Verfahrensschritte, also die Stufen der biologischen Reinigung sowie die Nachklärung, nacheinander im selben Behälter ablaufen, also nicht räumlich voneinander getrennt sind. Dieses Verfahren eignet sich grundsätzlich für den Betrieb kleinerer Einheiten.

Einen diskontinuierlichen Betrieb vermeidet das heute weit verbreitete kontinuierliche Belebungsverfahren, bei dem die in einem sogenannten Belebungsbecken unter Belüftung entstehenden Schlammflocken in einem nachgeschalteten Nachklärbecken Gelegenheit zum Absetzen erhalten. Ein Teil dieses Schlamms wird als sogenannter Rücklaufschlamm in das Belebungsbecken zurückgeführt, um dort die biologische Reinigung des neu zufließenden Abwassers zu fördern.

### Stand der Technik:

Zur Belüftung des Abwassers ist es bekannt, in dem Belebungsbecken einen motorisch angetriebenen Belüftungsrotor mit vertikaler Drehachse anzuordnen (DE-C 17 59 548). Dieser Belüftungsrotor, der meist durch eine mit Schwimmkörpern versehene Tragvorrichtung in der Höhe des Flüssigkeitsspiegels gehalten wird, sorgt durch die Anordnung von Rotorschaufeln an einem Schaufelrad sowohl für eine Durchmischung des Abwassers als auch für den erforderlichen Sauerstoffeintrag.

Der bei der Aufbereitung von Abwasser in solchen Kläranlagen nach dem Belebungsverfahren entstehende Klärschlamm darf aufgrund von Gesetzen und wirtschaftlichen Zwängen nur noch beschränkt deponiert, verbrannt oder landwirtschaftlich verwertet werden; deshalb kommt der Verringerung oder gar der Vermeidung von Klärschlamm eine immer größere Bedeutung zu.

Als ein Verfahren der Abfallverminderung gewinnt in den letzten Jahren der mechanische Zellaufschluss (Desintegration) der im Klärschlamm enthaltenen Mikroorganismen immer mehr an Bedeutung. Bei der Desintegration von Klärschlamm ist beabsichtigt, die Zellwände der Mikroorganismen zu zerstören und die Zellinhalte freizusetzen.

Dieser Zellaufschluss verfolgt im wesentlichen zwei Ziele. Zum einen soll die anaerobe Schlammbehandlung durch einen beschleunigten und verstärkten Abbau verbessert werden. Diese Beschleunigung beruht auf der mechanischen Unterstützung der Hydrolyse, da der Zellaufschluss zu einer Freisetzung des leicht abbaubaren Zellinnenwassers führt. Zusätzlich sollen fakultativ anaerobe Mikroorganismen aufgeschlossen werden, die ansonsten teilweise den Faulprozess überleben können und im Faulschlamm für den Restgehalt an organischen Stoffen mit verantwortlich sind; diese sollen durch den Zellaufschluss dem verstärkten Abbau zugänglich gemacht werden.

Zum anderen soll durch die Desintegration die Möglichkeit eröffnet werden, das Zellinnenwasser, das organische Substanzen wie Proteine und Polysaccharine enthält, als interne Kohlenstoffquelle zu erschließen. Dadurch werden sowohl eine Verringerung der Schlammmenge und damit der Faulzeit als auch eine Erhöhung der Menge von energetisch verwertbarem Faulgas erreicht. Weitere Vorteile sind unter anderem die Zerstörung von Schwimmschlamm und Fadenbakterien sowie eine Verbesserung der Absetzeigenschaften der Schlämme.

Neben Verfahren zur mechanischen Desintegration, bei denen der Kosten- und Energieaufwand zur Erzeugung von Kavitationsvorgängen, durch welche die eine Aufspaltung der Zellwände der Mikroorganismen bewirkenden Kräfte entstehen, sehr hoch ist, ist es auch bekannt, den Klärschlamm unter Druck durch eine Düse mit sich zunächst verengendem und dann wieder erweiterndem Querschnitt, eine sogenannte Lavaldüse, zu fördern. Dabei wird durch die Verringerung des Querschnitts die Fließgeschwindigkeit der Suspension in einem sich anschließenden Wirkraum derart erhöht, dass der Druck unter den Dampfdruck der Trägersubstanz, also Wasser, absinkt, während beim Durchströmen des sich anschließend wieder erweiternden Querschnitts durch Druckausgleich kollabierende Kavitationsblasen entstehen (DE 102 14 689 A1).

In diesem Zusammenhang ist in der älteren Patentanmeldung DE 103 43 748.7 vorgeschlagen worden, die Strömungsgeschwindigkeit im Eintrittsbereich des Wirkraumes so zu steigern, dass in dem Wirkraum selbst keine detaillierten Dampfblasen und keine übliche Kavitation mehr entstehen können, sondern dass ein Übergang zu einer kompletten Dampfströmung erreicht wird, die an der gesamten Oberfläche der Beladung des Trägermediums, also den Mikroorganismen angreift. Dadurch wird auf diese ein Beschleunigungseffekt wirksam, der unmittelbar danach wieder in eine Verzögerung infolge Kondensation des Dampfes übergeht. Durch diesen kombinierten Beschleunigungs- und Verzögerungseffekt, der in das Innere der Mikroorganismen wirkt, wird deren Zellmembran zerstört und werden Zellplasma sowie Zellkern freigesetzt.

Nach den bekannten Desintegrationsverfahren wird - schon aus wirtschaftlichen Gründen - in der Regel Klärschlamm behandelt, der gegenüber dem in Belebungsbecken behandelten Abwasser einen höheren Gehalt an Mikroorganismen aufweist. Dabei ist nicht nur die Behandlung des Klärschlamms vor der Ausfaulung möglich, sondern auch die Behandlung des Rücklaufschlammes, bevor er in das Belebungsbecken zurückgeführt wird, um dort die Aktivität des Belebtschlammes zu stimulieren. Durch den Zellaufschluss werden dem aeroben Abbau angepasste Enzyme freigesetzt, so dass ein verstärkter Abbau der Biomasse erreicht werden kann.

### Darstellung der Erfindung:

Vor diesem Hintergrund liegt der Erfindung die Aufgabe zugrunde, eine mit möglichst geringem Aufwand realisierbare Möglichkeit zu schaffen, um das Abwasser zu einem möglichst frühen Zeitpunkt, also beispielsweise schon im Belebungsbecken durch Desintegration behandeln zu können und auf diese Weise schon dort den Abbau von Biomasse zu intensivieren.

Erfindungsgemäß wird diese Aufgabe durch die Merkmale des Anspruchs 1 gelöst.

Vorteilhafte Weiterbildungen ergeben sich aus den Unteransprüchen.

Der Erfindung liegt die Erkenntnis zugrunde, dass der für die Durchströmung einer Desintegrationseinrichtung in Form eines Strömungskanals mit sich zunächst verengendem und dann wieder erweiterndem Querschnitt erforderliche Flüssigkeitsdruck nicht durch eine Pumpe in einer geschlossenen Rohrleitung erzeugt werden muss, sondern dass durch hochtourige Rotation eines radial zu einer vertikalen Drehachse angeordneten Strömungskanals, zum Beispiel in Form eines beidseitig offenen Rohrstücks mit Verengung, infolge der bei der Rotation auftretenden Zentrifugalkraft ein Saugdruck erzeugt werden kann, durch den die zu behandelnde Flüssigkeit durch den Strömungskanal und damit durch den Wirkraum hindurchgesaugt wird. Dabei kann die Höhe des Saugdrucks sowohl durch die Abmessungen des Strömungskanals und des Wirkraumes, als auch die Drehzahl der Rotationsbewegung beeinflusst werden. Zweckmäßig sind hierzu mehrere derartige Strömungskanäle an einer umlaufenden Kreisringscheibe angeordnet.

Dies eröffnet die Möglichkeit, nicht nur den Überschussschlamm oder den in das Belebungsbecken rückzuführenden Klärschlamm in einer geschlossenen Rohrleitung einer Desintegration zu unterziehen, sondern eine Desintegrationseinrichtung unmittelbar zum Beispiel in ein Belebungsbecken zu integrieren. Dies hat nicht nur Kostenvorteile, nämlich durch die Verringerung des apparativen Aufwands, sondern den großen Vorteil, dass die im Wege der Desintegration aufgeschlossenen Mikroorganismen sich im Belebungsbecken befinden, so dass die beabsichtigten Wirkungen unmittelbar erreicht werden.

Dabei ist es einerseits möglich, eine solche durch Rotation im Belebungsbecken wirksame Desintegrationseinrichtung mit dem Rotor eines dort ohnehin vorhandenen, an sich bekannten Misch- und Belüftungsaggregats für Abwasser zu kombinieren. Damit kann über einen Antrieb mit vergleichsweise geringem Energieaufwand sowohl eine Durchmischung und Belüftung des Abwassers als auch eine Desintegration erreicht werden. Vorteilhaft ist hierbei, dass die im Wege der Desintegration aufgeschlossenen Mikroorganismen genau in dem Bereich des Abwassers freigesetzt werden, in dem der durch die Belüftung erreichte Sauerstoffgehalt besonders hoch ist.

Von besonderem Vorteil aber ist es, wenn die Strömungskanäle an der erfindungsgemäßen Vorrichtung von der Drehachse ausgehend etwas nach außen ansteigend so angeordnet sind, dass die Austrittsöffnungen oberhalb des Flüssigkeitsspiegels liegen. Dadurch wird zugleich mit der Desintegration eine Belüftung des Abwassers erreicht, so dass der übliche Belüftungsrotor entbehrlich wird.

Unbeschadet der Desintegration des Abwassers im Belebungsbecken ist es durchaus möglich, den anschließend abgesonderten Klärschlamm nach den an sich bekannten Desintegrationsverfahren erneut zu behandeln.

### Beschreibung der Zeichnungen:

Die Erfindung wird nachstehend anhand der in der Zeichnung dargestellten Ausführungsformen näher erläutert. Es zeigt
- Fig. 1: einen Vertikalschnitt entlang der Linie I-I in Fig. 2 durch einen Behälter zur Behandlung von Abwasser nach dem Belebungsverfahren,
- Fig. 2: eine Draufsicht auf den Behälter nach Fig. 1,
- Fig. 3: eine vergrößerte Ansicht des Rotoraggregats,
- Fig. 4: einen Querschnitt durch den Rotor in größerem Maßstab,
- Fig. 5: eine Untersicht des Rotors gemäß Fig. 4, die
- Fig. 6 und 7: Details der Austrittsöffnung eines Strömungskanals in größerem Maßstab und
- Fig. 8: einen Vertikalschnitt durch eine weitere Ausführungsform der Erfindung.

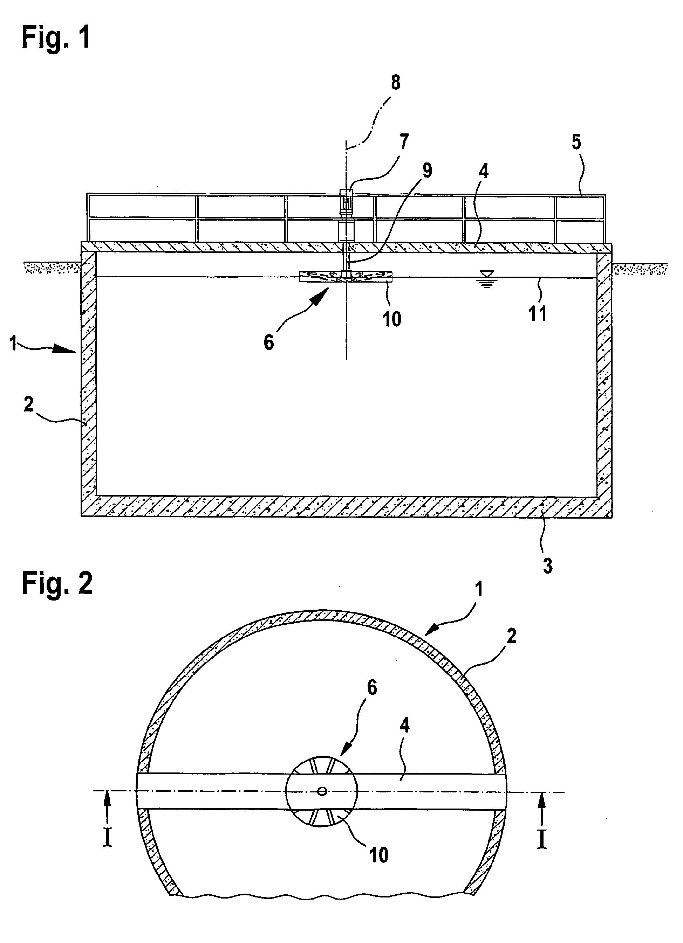

In den Fig. 1 und 2 ist in Vertikalschnitt und Draufsicht ein Behälter 1 zur Behandlung von Abwasser dargestellt. Der Behälter 1 umfasst eine zylindrische Behälterwand 2 und eine Behältersohle 3. Im Normalfall ist der Behälter 1 nach oben hin offen. Typisches Anwendungsbeispiel für einen solchen Behälter wäre ein Belebungsbecken in einer Kläranlage für Abwasser.

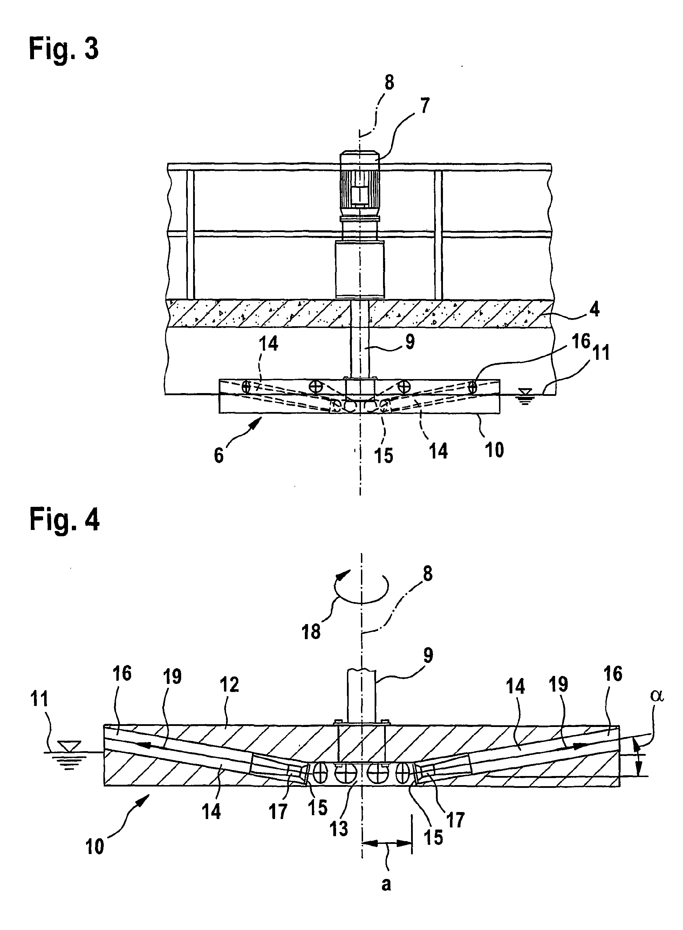

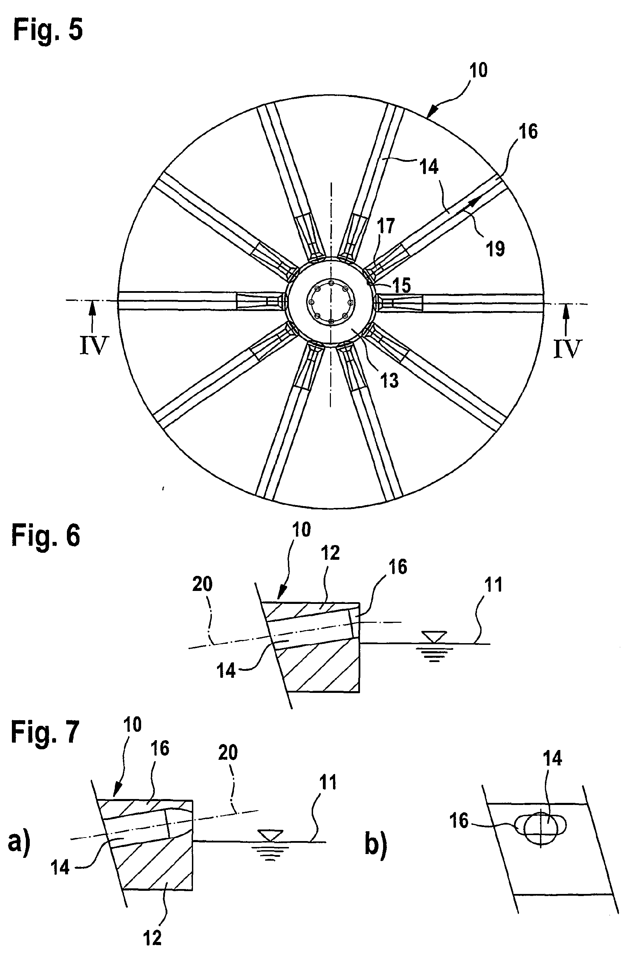

Demzufolge ist an einem den Behälter 1 am oberen Rand überspannenden Steg 4 mit Geländer 5 im Zentrum des Behälters 1 ein Rotoraggregat 6 angeordnet. Dieses Rotoraggregat 6 besitzt eine Antriebseinheit 7, zum Beispiel einen Elektromotor mit vertikaler Drehachse 8, an dessen durch den Steg 4 hindurchtretender Antriebsspindel 9 der eigentliche Rotor 10 angeordnet ist, der in die Oberfläche 11 der in dem Behälter 1 befindlichen Flüssigkeit eintaucht (Fig. 3). Während die Form des Behälters 1 und die Art der Anordnung und Befestigung des Rotoraggregats 6 grundsätzlich beliebig sind, kann die Erfindung selbst in ihren Grundzügen anhand der in den Fig. 4 und 5 dargestellten Ausführungsform eines Rotors 6 näher erläutert werden.

In dem dargestellten Ausführungsbeispiel besteht der Rotor 10, wie vor allem der Schnitt gemäß Fig. 4 erkennen lässt, aus einer Kreisringscheibe 12, in der in radialer Richtung von einer zentralen Ansaugkammer 13 ausgehend eine Anzahl von Strömungskanälen 14 radial nach außen verlaufend angeordnet sind. Die Strömungskanäle 14 verlaufen unter einem Winkel α von zum Beispiel 10° schwach nach außen hin ansteigend zwischen einer in die Ansaugkammer 13 mündenden Eintrittsöffnung 15 und einer am äußeren Rand der Kreisringscheibe 12 angeordneten Austrittsöffnung 16. Die Ansaugkammer 13 ist nach oben hin abgeschlossen. Die Eintrittsöffnungen 15 der Kanäle 14 liegen im Abstand a von der Drehachse 8; der Abstand a bestimmt so auch den Durchmesser der Ansaugkammer 13.

In dem der Drehachse 8 nächstliegenden Bereich der Strömungskanäle 14 befindet sich ein Wirkraum 17, der durch einen zunächst sich verengenden und dann wieder erweiternden Querschnitt des jeweiligen Strömungskanals 14 gebildet ist. Die Erfindung greift insoweit zurück auf ein Verfahren und eine Einrichtung, die Gegenstand der DE 102 14 689 A1 ist.

Der die Kreisringscheibe 12 umfassende Rotor 10 taucht in die Flüssigkeit ein, deren Spiegel bei 11 angedeutet ist. Dies bedeutet, dass die Eintrittsöffnungen 15 der Strömungskanäle 14 unterhalb des Flüssigkeitsspiegels 11, die Austrittsöffnungen 16 jedoch oberhalb des Flüssigkeitsspiegels 11 liegen. Wird der aus der Kreisringscheibe 12 gebildete Rotor 10 in Richtung des Pfeils 18 in Drehung um die Drehachse 8 versetzt, dann wird durch die dabei entstehende Zentrifugalkraft die in der Ansaugkammer 13 befindliche und die Eintrittsöffnungen 15 der Strömungskanäle 14 verschließende Flüssigkeit in Richtung der Pfeile 19 nach außen geschleudert.

Der Wirkraum 17, der zwischen einer Verengung und einer Erweiterung des Querschnitts des Strömungskanals 14 liegt, wirkt ähnlich einer sogenannten Lavaldüse. Durch die Verengung des Querschnitts steigt die Fließgeschwindigkeit der Suspension kontinuierlich an. Gleichzeitig mit der Zunahme der Fließgeschwindigkeit nimmt der statische Druck der Suspension ab, bis er im engsten Querschnitt, also im Bereich des Wirkraums 17 etwa dem Dampfdruck der Flüssigkeit entspricht. Dadurch kommt es in der Suspension zunächst zur Bildung von Dampfblasen. Wird die Fließgeschwindigkeit des Trägermediums der Suspension so gesteigert, dass durch den dadurch bedingten Druckabfall der Dampfdruck unterschritten wird, dann entstehen nicht nur Kavitationsblasen, die sogleich wieder zusammenfallen, sondern es wird die flüssige Phase praktisch vollständig in Dampf verwandelt, der allerdings unmittelbar nach Verlassen des Wirkraumes 17 sogleich wieder kondensiert. Insoweit greift die Erfindung auf ein Verfahren zurück, das Gegenstand der älteren Patentanmeldung DE 103 43 748.7 ist.

Infolge der enormen Vergrößerung des Volumens der flüssigen Phase beim Übergang in den Dampfzustand steigert sich die Strömungsgeschwindigkeit des Mediums im gleichen Ausmaß. Das hat zur Folge, dass auf die Beladung der flüssigen Phase, also auf die Bakterien und sonstigen Partikel, die von dem Dampfstrom mitgerissen werden, extreme Beschleunigungskräfte ausgeübt werden, die unmittelbar darauf bei Kondensation des Dampfes in die flüssige Phase wieder in Verzögerungskräfte übergehen. Infolge der Trägheit der Partikel, insbesondere der Zellkerne gegenüber dem Plasma und der Plasmahaut, werden dabei durch die Aggregatszustandsänderungen des die Mikroorganismen umgebenden Trägermediums auf diese Kräfte ausgeübt, die über Veränderungen der Struktur von Schlammflocken und über Veränderungen der Eigenschaften an der Membranoberfläche bereits zu Effekten führen, ohne dass die Mikroorganismen total zerstört und deren Inhaltsstoffe freigesetzt werden.

Durch entsprechende Wahl der Strömungsgeschwindigkeit des Trägermediums in dem Wirkraum, die durch die Abmessungen von Strömungskanal 14 und Wirkraum 17 sowie durch die Drehzahl der Rotation des Rotors 10 beeinflusst werden kann, können in dem Wirkraum unterschiedliche Behandlungsarten der Suspension gewählt werden, die vom Aufbrechen großer Flocken über die Zerstörung fadenförmiger Bakterien bis hin zum vollständigen Zellaufschluss reichen.

Da die Austrittsöffnungen 16 der Strömungskanäle 14 oberhalb des Flüssigkeitsspiegels 11 liegen, ist es sinnvoll, dort einen gewissen Widerstand beim Austreten der Flüssigkeit zu erzeugen, um ein eventuelles Eindringen atmosphärischer Luft zu verhindern. Ein den Austritt von Flüssigkeit behindernder Strömungswiderstand kann beispielsweise durch eine geringfügige Änderung der Richtung der Achse 20 des Strömungskanals 14 in Richtung zum Flüssigkeitsspiegel 11 hin erreicht werden (Fig. 6). In Fig. 7a ist dargestellt, wie die Austrittsöffnung 16 des Strömungskanals 14 zum Beispiel durch Veränderung der Geometrie des Querschnitts eine Verengung erfahren und damit einen Strömungswiderstand hervorrufen kann. Während Fig. 7a den Strömungskanal 14 mit der Austrittsöffnung 16 im Längsschnitt zeigt, ist in Fig. 7b angedeutet, wie der Kreisquerschnitt des Strömungskanals 14 zur Austrittsöffnung 16 hin in einen ovalen Querschnitt übergeführt werden kann.

Wenn, wie Fig. 4 zeigt, die Strömungskanäle 14 in der Kreisringscheibe 12 des Rotors 10 vom Zentrum her schräg nach außen ansteigend angeordnet sind, so dass die Austrittsöffnungen 16 der Strömungskanäle oberhalb des Flüssigkeitsspiegels 11 liegen, wird beim Ausströmen der durch die Drehbewegung in den Strömungskanälen 14 strömenden Flüssigkeit zugleich auch eine Durchmischung und ein Sauerstoffeintrag in die Flüssigkeit erzielt, so dass im Grunde auf die Misch- und Belüftungsaggregate, die bei derartigen Belebungsbecken zur Abwasserbehandlung üblich sind, verzichtet werden kann.

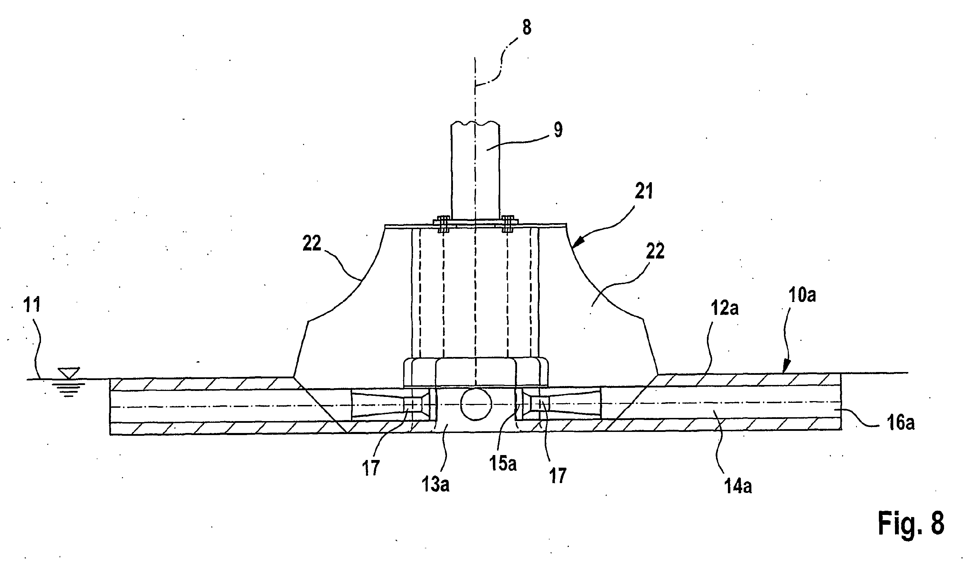

Grundsätzlich ist es aber auch möglich, eine Vorrichtung nach der Erfindung mit einer derartigen Belüftungsvorrichtung zu kombinieren; eine solche Ausführungsform ist in Fig. 8 im Schnitt dargestellt. Hier sind die Strömungskanäle 14a in der Kreisringscheibe 12a des Rotors 10a parallel zum Flüssigkeitsspiegel 11 angeordnet, so dass nicht nur die Eintrittsöffnungen 12a, sondern auch die Austrittsöffnungen 16a unterhalb des Flüssigkeitsspiegels 11 liegen. Die Ansaugkammer 13a ist hier nicht nach oben hin abgeschlossen, sondern führt zu einem an sich bekannten Schaufelrad 21, dessen Schaufeln 22 die durch die Ansaugkammer 13a geförderte Flüssigkeit nach außen werfen und so für eine Sauerstoffanreicherung sorgen. Die Wirkräume 17a in den der Drehachse 8 benachbarten Bereichen der Strömungskanäle 14a sind in entsprechender Weise ausgebildet wie oben beschrieben.

## Patentansprüche

1. Vorrichtung zum Zerkleinern partikulärer organischer Substanzen in Suspensionen von Mikroorganismen in einem Trägermedium, insbesondere in Abwässern, mit mindestens einem von der Suspension durchströmten geschlossenen Strömungskanal (14), in dem durch einen sich zunächst verengenden und dann wieder erweiternden Querschnitt ein Wirkraum (17) gebildet ist, in dem infolge Erhöhung der Fließgeschwindigkeit der Suspension durch Verringerung des statischen Drucks der Suspension unter den Dampfdruck bei nachfolgendem Druckausgleich Kräfte auf die organischen Substanzen ausgeübt werden, **dadurch gekennzeichnet, dass** der zwischen einer Eintrittsöffnung (15) und einer Austrittsöffnung (16) für die Suspension im wesentlichen gerade verlaufende Strömungskanal (14) an der Oberfläche (11) der in einem Behälter (1) gefassten Suspension radial zu einer vertikalen Achse (8) um diese drehbar so gelagert ist, dass er zumindest mit der der Drehachse (8) nächstliegenden Eintrittsöffnung (15) in die Suspension eintaucht, so dass er infolge der bei einer durch ein Antriebsaggregat (7) erzeugten Drehbewegung entstehenden Zentrifugalkraft in Richtung von der Drehachse (8) nach außen durchströmt wird.

2. Vorrichtung nach Anspruch 1, **dadurch gekennzeichnet, dass** die der Drehachse (8) nächstliegende Eintrittsöffnung (15) des Strömungskanals (14) im Abstand (a) von der Drehachse (8) angeordnet ist.

3. Vorrichtung nach Anspruch 1 oder 2, **dadurch gekennzeichnet, dass** der Wirkraum (17) dem der Drehachse (8) nächstliegenden Ende des Strömungskanals (14) benachbart angeordnet ist.

4. Vorrichtung nach einem der Ansprüche 1 bis 3, **dadurch gekennzeichnet, dass** sowohl die Eintrittsöffnung (15) als auch die gegenüberliegende Austrittsöffnung (16) unterhalb des Flüssigkeitsspiegels (11) der Suspension liegen.

5. Vorrichtung nach einem der Ansprüche 1 bis 3, **dadurch gekennzeichnet, dass** der Strömungskanal (14) unter einem Winkel α zum Flüssigkeitsspiegel (11) so angeordnet ist, dass die Eintrittsöffnung (15) unterhalb und die gegenüberliegende Austrittsöffnung (16) oberhalb des Flüssigkeitsspiegels (11) liegen.

6. Vorrichtung nach Anspruch 5, **dadurch gekennzeichnet, dass** der Winkel α etwa 10° beträgt.

7. Vorrichtung nach einem der Ansprüche 1 bis 6, **dadurch gekennzeichnet, dass** die Achse (20) des Strömungskanals (14) im Bereich der der Drehachse (8) fernliegenden Austrittsöffnung (16) abgewinkelt ist.

8. Vorrichtung nach einem der Ansprüche 1 bis 6, **dadurch gekennzeichnet, dass** der Strömungskanal (14) im Bereich der der Drehachse (8) fernliegenden Austrittsöffnung (16) eine Verengung aufweist.

9. Vorrichtung nach Anspruch 8, **dadurch gekennzeichnet, dass** die Verengung durch eine Veränderung der Form des Querschnitts erreicht ist.

10. Vorrichtung nach einem der Ansprüche 1 bis 9, **dadurch gekennzeichnet, dass** der Strömungskanal (14) an einer Kreisringscheibe (12) angeordnet ist, deren Mittelpunkt in der vertikalen Drehachse (8) liegt.

11. Vorrichtung nach Anspruch 10, **dadurch gekennzeichnet, dass** an der Kreisringscheibe (12) mehrere Strömungskanäle (14) unter vorzugsweise gleichen Winkeln radial zueinander angeordnet sind.

12. Vorrichtung nach Anspruch 11, **dadurch gekennzeichnet, dass** nur ein Teil der Strömungskanäle (14) Wirkräume (17) aufweist.

13. Vorrichtung nach einem der Ansprüche 10 bis 12, **dadurch gekennzeichnet, dass** die Kreisringscheibe (12) als Hohlkörper ausgebildet ist.

14. Vorrichtung nach einem der Ansprüche 10 bis 13, **dadurch gekennzeichnet, dass** die Kreisringscheibe (12) als Schwimmkörper ausgebildet ist.

15. Vorrichtung nach einem der Ansprüche 10 bis 14, **dadurch gekennzeichnet, dass** die Eintrittsöffnungen (15) der Strömungskanäle (14) in eine zentrale, nach oben abgeschlossene Ansaugkammer münden.

16. Vorrichtung nach einem der Ansprüche 10 bis 15, **dadurch gekennzeichnet, dass** die Kreisringscheibe (12) an dem Rotor (10a) eines an sich bekannten Misch- und Belüftungsaggregats angeordnet ist.

## Claims

1. An apparatus for comminuting particulate organic substances in suspensions of microorganisms in a carrier medium, in particular in waste water, with at least one closed flow channel (14) through which the suspension flows and in which an operative chamber (17) is formed by an initially narrowing and then widening cross-section, in which chamber, because of an increase in the flow rate of the suspension caused by reducing the static pressure of the suspension below the vapour pressure with subsequent pressure equalisation, forces are exerted on the organic substances, **characterised in that** the flow channel (14), which extends substantially straight between an inlet opening (15) and an outlet opening (16) for the suspension, on the surface (11) of the suspension contained in a container (1) is mounted radially relative to a vertical axis (8) so as to be rotatable about the latter in such a way that at least with the inlet opening (15) situated nearest the axis of rotation (8) it dips into the suspension so that, owing to the centrifugal force generated during rotary motion produced by a drive unit (7), the flow passes outwardly through it in the direction of the axis of rotation (8).

2. An apparatus according to Claim 1, **characterised in that** the inlet opening (15) of the flow channel (14) situated nearest the axis of rotation (8) is disposed at a distance (a) from the axis of rotation (8).

3. An apparatus according to Claim 1 or 2, **characterised in that** the operative chamber (17) is arranged adjacent the end of the flow channel (14) situated nearest the axis of rotation (8).

4. An apparatus according to any one of Claims 1 to 3, **characterised in that** both the inlet opening (15) and the opposing outlet opening (16) are situated below the liquid level (11) of the suspension.

5. An apparatus according to any one of Claims 1 to 3, in that the flow channel (14) is so arranged at an angle α relative to the liquid level (11) that the inlet opening (15) is situated below the liquid level (11) and the opposing outlet opening (16) is situated thereabove.

6. An apparatus according to Claim 5, **characterised in that** the angle α is approximately 10°.

7. An apparatus according to any one of Claims 1 to 6, **characterised in that** the axis (20) of the flow channel (14) is offset in the region of the outlet opening (16) situated remote from the axis of rotation (8).

8. An apparatus according to any one of Claims 1 to 6, **characterised in that** the flow channel (14) has a constriction in the region of the outlet opening (16) situated remote from the axis of rotation (8).

9. An apparatus according to Claim 8, **characterised in that** the constriction is achieved by varying the shape of the cross-section.

10. An apparatus according to any one of Claims 1 to 9, **characterised in that** the flow channel (14) is arranged on a circular ring disc (12), the centre point of which lies on the vertical axis of rotation (8).

11. An apparatus according to Claim 10, **characterised in that** a plurality of flow channels (14) are arranged radially in relation to one another on the circular ring disc (12) at preferably equal angles.

12. An apparatus according to Claim 11, **characterised in that** only one part of the flow channels (14) has operative chambers (17).

13. An apparatus according to any one of Claims 10 to 12, **characterised in that** the circular ring disc (12) is in the form of a hollow body.

14. An apparatus according to any one of Claims 10 to 13, **characterised in that** the circular ring disc (12) is the form of a float.

15. An apparatus according to any one of Claims 10 to 14, **characterised in that** the inlet openings (15) of the flow channels (14) discharge into a central, upwardly closed intake chamber.

16. An apparatus according to any one of Claims 10 to 15, **characterised in that** the circular ring disc (12) is arranged on the rotor (10a) of a per se known mixing and aerating unit.

## Revendications

1. Dispositif pour fractionner des substances organiques particulaires en suspensions de microorganismes dans un fluide support, en particulier dans des eaux résiduaires, comportant au moins un conduit d'écoulement (14) fermé, dans lequel circule la suspension et dans lequel, sous l'effet d'une section se rétrécissant d'abord et s'élargissant ensuite à nouveau, est formée une chambre active (17) dans laquelle des forces, générées par l'augmentation de la vitesse d'écoulement de la suspension due à la diminution de la pression statique de la suspension en dessous de la pression de vapeur, s'exercent lors de l'équilibre de pression consécutif sur les substances organiques, **caractérisé en ce que** le conduit d'écoulement (14), sensiblement droit entre un orifice d'admission (15) et un orifice d'évacuation (16) de la suspension, est monté au niveau de la surface (11) de la suspension, contenue dans un réservoir (1), de manière à pouvoir tourner autour d'un axe vertical (8) dans le sens radial par rapport à celui-ci, de telle sorte qu'il plonge dans la suspension au moins avec l'orifice d'admission (15) le plus proche de l'axe de rotation (8), de telle sorte que, sous l'effet de la force centrifuge se produisant lors d'un mouvement de rotation généré par un organe d'entraînement (7), il est traversé dans une direction partant de l'axe de rotation (8) vers l'extérieur.

2. Dispositif selon la revendication 1, **caractérisé en ce que** l'orifice d'admission (15), le plus proche de l'axe de rotation (8), du conduit d'écoulement (14) est situé à la distance (a) de l'axe de rotation (8).

3. Dispositif selon la revendication 1 ou 2,
**caractérisé en ce que** la chambre active (17) est adjacente à l'extrémité du conduit d'écoulement (14), la plus proche de l'axe de rotation (8).

4. Dispositif selon l'une quelconque des revendications 1 à 3, **caractérisé en ce que** tant l'orifice d'admission (15) que l'orifice d'évacuation (16) opposé sont disposés en dessous du niveau (11) de la suspension.

5. Dispositif selon l'une quelconque des revendications 1 à 3, **caractérisé en ce que** le conduit d'écoulement (14) est disposé en délimitant un angle α avec le niveau de liquide (11), de telle sorte que l'orifice d'admission (15) est situé en dessous du niveau de liquide (11) et l'orifice d'évacuation (16) opposé est disposé au-dessus du niveau de liquide (11).

6. Dispositif selon la revendication 5, **caractérisé en ce que** l'angle α mesure environ 10°.

7. Dispositif selon l'une quelconque des revendications 1 à 6, **caractérisé en ce que** l'axe (20) du conduit d'écoulement (14) est coudé dans la zone de l'orifice d'évacuation (16) éloigné de l'axe de rotation (8).

8. Dispositif selon l'une quelconque des revendications 1 à 6, **caractérisé en ce que** le conduit d'écoulement (14) comporte un rétrécissement dans la zone de l'orifice d'évacuation (16) éloigné de l'axe de rotation (8).

9. Dispositif selon la revendication 8, **caractérisé en ce que** le rétrécissement est obtenu par une modification de la forme de la section.

10. Dispositif selon l'une quelconque des revendications 1 à 9, **caractérisé en ce que** le conduit d'écoulement (14) est disposé au niveau d'un disque annulaire (12), dont le centre est situé sur l'axe de rotation (8) vertical.

11. Dispositif selon la revendication 10, **caractérisé en ce que** plusieurs conduits d'écoulement (14) sont disposés, dans le sens radial les uns par rapport aux autres, sur le disque annulaire (12) en délimitant de préférence des angles identiques.

12. Dispositif selon la revendication 11, **caractérisé en ce que** seulement une partie des conduits d'écoulement (14) comporte des chambres actives (17).

13. Dispositif selon l'une quelconque des revendications 10 à 12, **caractérisé en ce que** le disque annulaire (12) est réalisé sous la forme d'un corps creux.

14. Dispositif selon l'une quelconque des revendications 10 à 13, **caractérisé en ce que** le disque annulaire (12) est réalisé sous la forme d'un corps flottant.

15. Dispositif selon l'une quelconque des revendications 10 à 14, **caractérisé en ce que** les orifices d'admission (15) des conduits d'écoulement (14) débouchent dans une chambre d'aspiration centrale, fermée vers le haut.

16. Dispositif selon l'une quelconque des revendications 10 à 15, **caractérisé en ce que** le disque annulaire (12) est monté sur le rotor (10a) d'un organe de brassage et d'aération connu en soi.
